# EUROPEAN PATENT APPLICATION

(11) **EP 4 079 399 A1**
(43) Date of publication of application: **26.10.2022**
(21) Application number: 21170236.0
(22) Date of filing: 23.04.2021
(51) Int. Cl.: B01J 23/44, B01J 23/46, B01J 35/00, B01J 35/04, B01J 23/63, B01J 37/02, B01J 37/03, B01D 53/94

(54) **PLATINUM-CONTAINING THREE-WAY CATALYST FOR CLOSE-COUPLED ENGINE APPLICATION**

(71) Applicant: BASF CORPORATION, Florham Park, NJ 07932 (US)
(72) Inventor: DUMBUYA, Karifala, 30173 Hannover (DE); SCHMITZ, Thomas, 30173 Hannover (DE); JI, Chunxin, Iselin, NJ 08830 (US); WALTZ, Florian, 30173 Hannover (DE); SIEMUND, Stephan, 30173 Hannover (DE)
(74) Representative: Maiwald Patent- und Rechtsanwaltsgesellschaft mbH

(57) **Abstract**

The present invention relates to three-way conversion catalysts (TWC) for the treatment of an exhaust gas stream comprising nitrogen oxides (NOx), carbon monoxide (CO), and hydrcarbons (HC), comprising platinum group metal (PGM), a refractory metal oxide support, and a carrier characterized in that the platinum group metal (PGM) comprises platinum, palladium and rhodium, as well as methods and uses thereof.

## Description

The present invention relates to catalysts for the treatment of exhaust gas streams generated in automotive applications. The catalysts of the present invention are three-way conversion catalysts (TWC). The present invention also relates to a method of treating exhaust gas streams with the three-way conversion catalysts as well as their use thereof.

Effective exhaust gas treatment systems for automotives have been developed and are widely used nowadays. The three main pollutants from fuel engines include nitrogen oxides (NOx), unburned hydrocarbons (HC), and carbon monoxide (CO). These three pollutants are purged from the exhaust gas stream by the use of so-called three way conversion catalysts (TWC).

Three-way conversion catalysts (TWC) typically require high temperatures for efficient and complete removal of the pollutants from the exhaust gas stream. However, high temperatures can negatively affect the catalyst stability and performance. For instance, high temperatures can lead to sintering processes, which reduce the surface area of the catalyst. This can result in deterioration of the catalyst performance.

One way of addressing this problem is by selecting specific combinations of platinum group metal (PGM) and support materials allowing to maintain the catalyst's function over time and increasing the catalyst's stability against exposure to high temperatures. For instance, most of the conventional close-coupled three-way conversion catalysts (TWC) almost exclusively contain palladium and rhodium as the platinum group metals (PGM).

Platinum group metals (PGM) are precious metals and are only available at high cost. In particular, the cost of palladium is 50% higher than the cost of platinum. Therefore, already partial replacement of palladium with platinum in existing catalyst formulations would have enormous cost saving potential. However, especially platinum is known to have only very limited stability in three-way conversion catalysts due to sintering processes observed at high engine temperatures.

Accordingly, there is the objective of designing three-way conversion catalysts (TWC) with improved stability at high temperatures, in which increased amounts of platinum can be used as platinum group metal (PGM) and other more expensive platinum group metals (PGM) can be avoided or at least partially replaced by platinum.

The present invention solves this problem by providing improved formulations for three-way conversion catalysts (TWC) in which relatively high amounts of platinum are included replacing other, more expensive platinum group metals (PGM), while the three-way conversion catalysts (TWC) of present invention show very good stability and excellent performance at high engine temperatures.

A first aspect of the present invention relates to a three-way conversion catalyst (TWC) for the treatment of an exhaust gas stream comprising nitrogen oxides (NOx), carbon monoxide (CO) and hydrocarbons (HC), comprising platinum group metal (PGM), a refractory metal oxide support, and a carrier characterized in that the platinum group metal (PGM) comprises platinum, palladium and rhodium.

In a preferred embodiment, the three-way conversion catalyst (TWC) is in closed-coupled position.

In another preferred embodiment, the three-way conversion catalyst (TWC) comprises multiple washcoat layers including a bottom washcoat layer and a top washcoat layer.

In another preferred embodiment, the multiple washcoat layers consist of two washcoat layers, one bottom washcoat layer and one top washcoat layer.

In another preferred embodiment, the bottom washcoat layer comprises the combination of platinum and palladium as platinum group metal (PGM).

In another preferred embodiment, the top washcoat comprises the combination of palladium and rhodium as platinum group metal (PGM).

In another preferred embodiment, the bottom washcoat layer comprises platinum and palladium as the only platinum group metal (PGM) and/or the top washcoat comprises rhodium, preferably palladium and rhodium, and more preferably platinum, palladium and rhodium, as the only platinum group metal (PGM).

In another preferred embodiment, the refractory metal oxide support is selected from a mixture or mixed oxide of ceria and alumina or lanthana-doped alumina comprising lanthana in an amount of up to 10 wt% based on the total weight of the lanthana-doped alumina.

In another preferred embodiment, the refractory metal oxide support is selected from a mixture or mixed oxide of ceria and alumina having a weight ratio of 10:90 to 90:10.

In another preferred embodiment, the platinum is pre-treated.

In another preferred embodiment, the three-way conversion catalyst (TWC) further comprises an oxygen storage component (OSC) and/or a promoter component.

In another preferred embodiment, the three-way conversion catalyst (TWC) has a weight ratio of platinum to palladium of below 1:1.

A second aspect of the invention relates to a method of treating an exhaust gas stream from a gasoline engine comprising the steps of providing an exhaust gas stream from a gasoline engine comprising nitrogen oxides (NOx), carbon monoxide (CO) and hydrocarbons (HC), and contacting the exhaust gas stream with the three-way conversion catalyst (TWC) of the present invention.

A third aspect of the present invention relates to the use of the three-way conversion catalyst (TWC) of the present invention for purifying nitrogen oxides (NOx), carbon monoxide (CO) and hydrocarbons (HC) from the exhaust gas stream of a gasoline engine.

In a preferred embodiment of the third aspect of the present invention, the use of the three-way conversion catalyst (TWC) comprises purifying the exhaust gas stream of the gasoline engine including an engine bed temperature of more than 1000°C.

As used herein, terms like "catalyst", "catalytic function", "catalyst component", "catalyst material" or the like refer to a material that promotes a reaction or several reactions.

Most importantly, the exhaust gas treatment system must be able to remove the three major pollutants generated from a typical gasoline engine, including nitrogen oxides (NOx), hydrocarbons (HC) and carbon monoxide (CO). Accordingly, the removal of these three most important pollutants is achieved in the present invention by a three-way conversion catalyst (TWC).

The term "three-way conversion catalyst" (TWC) refers to the function of three-way conversion where hydrocarbons (HC), carbon monoxide (CO), and nitrogen oxides (NOx) are substantially simultaneously converted. For instance, a gasoline engine typically operates under near stoichiometric reaction conditions that oscillate or are pertubated slightly between fuel rich and fuel lean air to fuel ratios (A/F ratios) (λ = 1 ± ∼0.01), at perturbation frequencies of 0.5 to 2 Hz. Use of "stoichiometric" herein can refer to the conditions of a gasoline engine, accounting for the oscillations or pertubations of A/F ratios near stoichiometric. Three-way conversion catalysts (TWC) may include suitable refractory metal oxide supports and optionally oxygen storage components (OSCs) that have multivalent states which allows oxygen to be held and released under varying air to fuel ratios. Under rich conditions when nitrogen oxides (NOx) are being reduced, the oxygen storage component (OSC) provides a small amount of oxygen to consume unreacted carbon monoxide (CO) and hydrocarbons (HC). Likewise, under lean conditions when carbon monoxide (CO) and hydrocarbons (HC) are being oxidized, the oxygen storage component (OSC) reacts with excess oxygen and/or NOx. As a result, even in the presence of an atmosphere that oscillates between fuel rich and fuel lean air to fuel ratios, there is conversion of hydrocarbons (HC), carbon monoxide (CO), and nitrogen oxides (NOx) all at the same (or at essentially all the same) time.

In the following, the three-way conversion catalyst of the present invention is described in more detail. Accordingly, the three-way layered catalyst (TWC) comprises several essential catalytic components. Preferably, the composition of the three-way conversion catalytic coating is selected to comprise a hydrocarbon (HC) oxidation component, a carbon monoxide (CO) oxidation component, and a nitrogen oxide (NOx) reduction component allowing to purge NOx, HC and CO from the exhaust gas stream. The three-way conversion catalyst (TWC) of the present invention includes a platinum group metal (PGM) component. The platinum group metal (PGM) component is combined in the catalyst with a suitable support material, typically a refractory metal oxide support, whereas the combination of platinum group metal (PGM) and refractory metal oxide support is critical for achieving high catalyst performance and excellent stability in view of aging at high temperatures.

The whole three-way conversion catalyst (TWC) is positioned on a suitable carrier material that allows positioning the three-way conversion catalyst (TWC) in the exhaust gas treatment line of an automotive in the most appropriate manner. The carrier material is defined in more detail below.

The three-way conversion catalyst is preferably positioned downstream of the exhaust gas treatment line, and typically in close-coupled position. The term "close-coupled" indicates a position, which is located in fluid communication with and shortly downstream the engine outlet, preferably the gasoline engine outlet, preferably within 50 cm, more preferably within 30 cm and most preferably within 20 cm after the engine outlet. Therefore, in the context of the present invention, a "close-coupled" position is understood as it is commonly understood in the art, which is for instance substantially closer to the engine than in traditional "underfloor" positions (which are beneath the floor of a vehicle). Generally, although not limited thereto, such a "close-coupled" position is preferably within the engine compartment, which is normally beneath the hood of a vehicle, and adjacent to the exhaust manifold. Therefore, a three-way conversion catalyst (TWC) positioned in "close-coupled" position is commonly exposed to high temperature exhaust gas immediately exiting the engine after the engine has warmed up, and thus often serves to reduce hydrocarbon emissions during cold start, which is typically the period immediately following the start of the engine from ambient conditions.

If the three-way conversion catalyst (TWC) is coupled with an additional particulate filter to form a four-way conversion catalyst (FWC) in the exhaust gas treatment line, the four-way conversion catalyst (FWC) is also positioned most preferably "close-coupled", like the three-way conversion catalyst (TWC) also most preferably is.

A variety of different carrier materials can be used with the three-way conversion catalyst of the present invention. This is discussed in more detail below.

The three-way conversion catalyst (TWC) preferably further includes an additional oxygen storage component (OSC) and/or a promoter component.

The three-way conversion catalytic coating comprises a platinum group metal (PGM) component. It is essential in the present invention that the three-way conversion catalyst (TWC) combines the presence of at least the three platinum group metals platinum, palladium and rhodium. Further, additional platinum group metals (PGM) other than platinum, palladium and rhodium can be optionally present as well. For instance, further platinum group metals (PGM) like ruthenium, osmium and/or iridium can be optionally present in the three-way conversion catalyst (TWC) of the present invention, in addition to platinum, palladium and rhodium, whereas loadings of the latter three being essential in the present invention.

The present inventors have found that particularly the usual palladium component in the three-way conversion catalysts (TWC) of the present invention can be at least partially replaced by platinum. Accordingly, in contrast to the conventional three-way conversion catalysts (TWC) known in the prior art, which are mostly based on palladium and rhodium as the platinum metal group (PGM) component, the three-way conversion catalyst (TWC) of the present invention contains palladium and rhodium but also substantial amounts of platinum partially replacing the palladium component.

In the three-way conversion catalysts (TWC) of the present invention, based on the total weight of the platinum group metals (PGM), the relative ratio per weight of platinum / palladium / rhodium is preferably from 5/103/10 to 54/54/10, more preferably from 10/98/10 to 45/63/10, and even more preferably from 25/83/10 to 35/73/10. In addition, or alternatively, the weight ratio of platinum to palladium is preferably from 5:95 to 50:50, more preferably from 15: 85 to 45:55, and even more preferably from 27:73 to 40:60. The total loading of the platinum group metal (PGM) component in the three-way conversion catalyst (TWC) of the present invention comprises platinum, palladium and rhodium as essential components. More preferably, the three-way conversion catalyst (TWC) comprises the platinum group metal (PGM) component supported on the refractory metal oxide support at a loading in the range of from 1 to 200 g/ft³, more preferably in the range of from 20 to 180 g/ft³, even more preferably in the range of from 50 to 150 g/ft³, and most preferably in the range of from 70 to 125 g/ft³. Generally, the skilled person will be familiar with determining the loadings of platinum group metals (PGM) on catalytic coatings. For instance, XRF (X-ray fluorescence) and inductively coupled plasma atomic emission spectroscopy (ICP-AES) can be used for measuring the catalytic loading of platinum group metal (PGM).

In one preferred embodiment of the present invention, the platinum component of the three-way conversion catalyst (TWC) can additionally be pre-treated. Pre-treatment of the inventive platinum component refers to a component and/or preparation method, in which the pre-treated platinum component is obtained by impregnating palladium, or rhodium, and/or any other platinum group metal (PGM) of the present invention, on the corresponding refractory metal oxide support, calcining the refractory metal oxide support comprising palladium, or rhodium, or any other platinum group metal (PGM) of the present invention, then impregnating platinum on the calcined refractory metal oxide support comprising palladium, or rhodium, and/or any other platinum group metal (PGM) of the present invention and calcining the platinum-containing refractory metal oxide support comprising palladium, or rhodium, or any other platinum group metal (PGM) of the present invention.

The partial replacement pf palladium by platinum in the three-way conversion catalysts (TWC) of the present invention without substantially diminishing the catalyst's ability to purge hydrocarbons (HC), nitrogen oxides (NOx) and carbon monoxide (CO) is remarkable and unexpected because platinum is known for sintering behavior at high engine temperatures thereby deteriorating the surface area and overall performance of a three-way conversion (TWC) catalyst. Further, this is also an important finding from a commercial standpoint because platinum is substantially less expensive than palladium.

The present inventors have found that the partial replacement of palladium by platinum without substantial loss of catalyst function could be especially achieved when the inventive selection of platinum group metal (PGM) is combined with selected refractory metal oxide support materials.

The three-way conversion catalyst (TWC) of the present invention comprises a refractory metal oxide support. The refractory metal oxide support is essential to the present invention and is combined with the platinum group metal (PGM) component in the inventive catalyst. Preferably, the refractory metal oxide support is non-zeolithic. There are several especially preferred refractory metal oxide support materials that can be used in the three-way conversion catalysts (TWC) of the present invention for achieving the claimed technical effects.

One preferred refractory metal support material comprises a mixture or mixed oxide of cerium oxide and aluminum oxide. Preferably, the mixture or the mixed oxide of cerium oxide to aluminum oxide has a weight ratio of ceria to alumina from 10:90 to 90:10, or 25:75 to 75:25, or 30:70 to 70:30, more preferably from 40:60 to 60:40, and even more preferably from 45:55 to 55:45.

Another preferred refractory metal support material comprises aluminum oxide that is doped with lanthana (like La₂O₃). Alumina doped with lanthana refers to alumina containing a rather small amount of lanthana, preferably up to 10 wt%, more preferably up to 7 wt%, even more preferably up to 5 wt%, and most preferably up to 4 wt% lanthana based on the weight of the lanthana-doped alumina. The La-doped alumina contains at least 0.5 wt%, more preferably at least 1 wt%, and most preferably at least 2 wt% lanthana, based on the weight of the lanthana-doped alumina.

The aluminum oxide as used in the inventive refractory metal oxide support material can be preferably stabilized aluminum oxide. The aluminum oxide of the refractory metal oxide support can also preferably be gamma aluminum oxide. The refractory metal oxide support of the three-way conversion catalyst (TWC) of the present invention can optionally comprise additional metal oxides, like zirconia, ceria, baria and/or neodymia.

The total loading of the refractory metal oxide support in the three-way conversion catalyst (TWC) of the present invention is preferably in the range of from 0.2 to 6.0 g/in³, more preferably in the range of from 0.5 to 5.0 g/in³, more preferably in the range of from 1.0 to 4.0 g/in³, and even more preferably in the range of from 2.5 to 3.5 g/in³.

The ceria content in the three-way conversion catalyst (TWC) of the present invention preferably is in the range of 0.4 to 4.0 g/in³, more preferably in the range of 0.7 to 3.0 g/in³, even more preferably in the range of 0.9 to 2.0 g/in³, or most preferably in the range of 1.0 to 1.5 g/in³.

More preferably, the refractory metal oxide support has a porosity in the range of from 0.05 to 1.5 ml/g, more preferably in the range of from 0.1 to 1.0 ml/g, more preferably in the range of from 0.15 to 0.8 ml/g. The porosity of the refractory metal oxide support is determined by physisorption of N₂ and analyzing the physisorption isotherms via BJH (Barett, Joyner, Halenda) analysis according to DIN 66134. The three-way conversion catalyst (TWC) of the present invention preferably includes an additional oxygen storage compound. Such an oxygen storage compound can be present in a bottom washcoat or in a top washcoat, or in the bottom and top washcoat, when several washcoats are applied in the three-way conversion catalyst (TWC) of the present invention.

More preferably, the oxygen storage compound comprises cerium, even more preferably comprises one or more of a cerium oxide, a mixture of oxides comprising a cerium oxide, and a mixed oxide comprising cerium, wherein the mixed oxide comprising cerium preferably additionally comprises one or more of zirconium, yttrium, neodynium, lanthanum, and praseodymium, more preferably additionally comprises one or more of zirconium, yttrium, neodynium, and lanthanum, more preferably additionally comprises zirconium, yttrium, neodynium, and lanthanum. Further, the oxygen storage compound comprising cerium may consist of two or more different mixed oxides wherein each one of these mixed oxides may comprise cerium and one or more of zirconium, yttrium, neodynium, lanthanum, and praseodymium. The mixture or mixed oxide of cerium oxide and zirconium oxide is one preferred oxygen storage component.

The optional oxygen storage compound has a preferred porosity in the range of from 0.05 to 1.5 ml/g, more preferably in the range of from 0.1 to 1.0 ml/g, more preferably in the range of from 0.15 to 0.8 ml/g. The porosity of the oxygen storage compound is determined by physisorption of N₂ and analyzing the physisorption isotherms via BJH (Barett, Joyner, Halenda) analysis according to DIN 66134.

The three-way conversion catalyst (TWC) preferably comprises an additional promoter component. The term "promoter" as used in the context of the present invention relates to a compound, which enhances the overall catalytic activity.

If the three-way conversion catalyst (TWC) of the present invention is a layered catalyst comprising several coatings, i.e. several washcoats, for example including a bottom washcoat and a top washcoat, a promoter component can be preferably included in either the bottom washcoat or the top washcoat, or even more preferably in both the bottom washcoat as well as the top washcoat. The promoter component preferably comprises one or more of zirconium, barium, strontium, lanthanum, neodymium, yttrium, and praseodymium. One preferred promoter component is defined by the mixture of barium, zirconium and neodymium, or a mixed oxide of barium, zirconium and neodymium. If a ternary mixture of barium oxide, zirconium oxide and neodymium oxide is used as promoter component, the weight ratio of barium oxide to zirconium oxide to neodymium oxide is preferably from 2:1:1 to 7:1:1, more preferably from 3:1:1 to 6:1:1, and even more preferably from 4:1:1 to 5:1:1. Another preferred promoter component comprises one or more of zirconium and barium. In one embodiment, the promoter comprises, more preferably is, one or more of a mixture of barium oxide and strontium oxide and a mixed oxide of barium and strontium. Another very preferred promoter is the mixture of barium oxide and zirconium oxide, or alternatively, either barium oxide or zirconium oxide. If a mixture of barium oxide and zirconium oxide is used as promoter component, the weight ratio of barium oxide to zirconium oxide is preferably from 0.5 to 5, more preferably from 1 to 3, even more preferably from 1.2 to 2.5. A preferred amount of promoter component in the three-way conversion catalyst (TWC) of the present invention, or in one of the washcoats, like the bottom or the top washcoat, is defined by a loading in the range of from 0.01 to 0.5 g/in³, more preferably from 0.02 to 0.25 g/in³, or even more preferably in the range of from 0.05 to 0.12 g/in³.

It is preferred in the present invention that the three-way conversion catalyst has a layered design. That is, the three-way conversion catalyst of the present invention is preferably prepared by applying the various catalytic functions or catalytic components to the carrier in the form of coating or several coatings (commonly referred to as washcoat or washcoats).

As used herein and as described in Heck, Ronald and Robert Farrauto, Catalytic Air Pollution Control, New York: Wiley-Interscience, 2002, pp. 18-19, a washcoat layer comprises a compositionally distinct layer of material disposed on the surface of a monolithic substrate or optionally on an underlying washcoat layer. A washcoat typically is comprised of a refractory metal oxide support having high surface area and further catalytically active materials including platinum group metal (PGM), and optionally further materials like oxygen storage components and/or promoters. Preferably, additives like binders can also be included.

Preferably, the three-way conversion catalyst (TWC), preferably in the form of one or several washcoats, is present on the carrier at a total loading in the range of from 0.5 to 5 g/in³, more preferably in the range of from 1.5 to 4.5 g/in³, more preferably in the range of from 2.0 to 4.0 g/in³, and most preferably in the range of from 2.7 to 3.5 g/in³.

The three-way conversion catalyst of the present invention can have one single washcoat layer, but two or more washcoat layers, especially two washcoat layers comprising a bottom washcoat and a top washcoat, are more preferred. Each washcoat layer can have unique chemical catalytic functions depending on its exact composition. It is especially preferred that the bottom washcoat (or first coating) is applied on the substrate, and the top washcoat (or second coating) is applied on the bottom washcoat. As far as the bottom washcoat or first washcoat (or first coating) is concerned, the combination of palladium and platinum is preferably added as platinum group metals (PGM), more preferably in the absence of rhodium. Other platinum group metals like ruthenium, osmium and/or iridium can be optionally present, together with palladium and platinum. In one preferred embodiment, the bottom washcoat can include palladium as the only platinum group metal (PGM), with platinum and rhodium being absent. Alternatively, platinum and palladium are combined in the bottom washcoat in the absence of any other platinum group metal (PGM).

Optionally, palladium, in the absence of platinum and rhodium, can be combined with other platinum group metals (PGM) like ruthenium, osmium and/or iridium in the bottom washcoat.

The platinum group metal (PGM) component of the bottom washcoat is supported on a refractory metal oxide support. Preferably, the refractory metal oxide support of the bottom washcoat is non-zeolithic. The refractory metal oxide support of the bottom washcoat preferably comprises a mixture of aluminum oxide and cerium oxide. Another preferred refractory metal support material of the bottom washcoat comprises aluminum oxide that is doped with lanthanum. The aluminum oxide as used in the refractory metal oxide support material can be preferably stabilized aluminum oxide. The aluminum oxide of the refractory metal oxide support of the bottom washcoat can also preferably be gamma aluminum oxide. The refractory metal oxide support of the bottom washcoat can optionally comprise additional metal oxides, like zirconia, ceria, baria and/or neodymia.

Another preferred refractory metal support material of the bottom washcoat comprises a mixture or mixed oxide of cerium oxide and aluminum oxide. Preferably, the mixture or the mixed oxide of ceria and alumina has a weight ratio of ceria to alumina from 10:90 to 90:10, 25:75 to 75:25, or 30:70 to 70:30, more preferably from 40:60 to 60:40, and even more preferably from 45:55 to 55:45.

Another preferred refractory metal support material of the bottom washcoat comprises aluminum oxide that is doped with lanthana (like La₂O₃). Alumina doped with lanthana refers to alumina containing a rather small amount of lanthana, preferably up to 10 wt%, more preferably up to 7 wt%, even more preferably up to 5 wt%, and most preferably up to 4 wt% lanthana, based on the total weight of the lanthana-doped alumina. The La-doped alumina contains at least 0.5 wt%, more preferably at least 1 wt%, and most preferably at least 2 wt% lanthana, based on the total weight of the lanthana-doped alumina.

The aluminum oxide as used in the refractory metal oxide support material of the bottom washcoat can be preferably stabilized aluminum oxide. The aluminum oxide of the refractory metal oxide support can also preferably be gamma aluminum oxide. The refractory metal oxide support of the three-way conversion catalyst of the present invention can optionally comprise additional metal oxides, like zirconia, ceria, baria and/or neodymia.

As far as the top washcoat or second washcoat (or second coating) is concerned, the combination of rhodium and palladium is preferably added as platinum group metals (PGM), preferably in the absence of platinum. Other platinum group metals like ruthenium, osmium and/or iridium can be optionally present, together with rhodium and palladium. In one preferred embodiment, the top washcoat can even include rhodium as the only platinum group metal (PGM), with platinum and palladium being absent. In another preferred embodiment, the top washcoat includes rhodium, palladium and platinum. Optionally, rhodium, in the absence of platinum and palladium, can be combined in the topcoat with other platinum group metals (PGM) like ruthenium, osmium and/or iridium.

The platinum group metal (PGM) component of the top washcoat is supported on a refractory metal oxide support. Preferably, the refractory metal oxide support of the top washcoat is non-zeolithic. The refractory metal oxide support of the top washcoat preferably comprises a mixture of aluminum oxide and cerium oxide. Another preferred refractory metal support material of the top washcoat comprises aluminum oxide that is doped with lanthanum. The aluminum oxide as used in the refractory metal oxide support material can be preferably stabilized aluminum oxide. The aluminum oxide of the refractory metal oxide support of the top washcoat can also preferably be gamma aluminum oxide. The refractory metal oxide support of the top washcoat of the present invention can optionally comprise additional metal oxides, like zirconia, ceria, baria and/or neodymia.

One preferred refractory metal support material of the top washcoat comprises a mixture or mixed oxide of cerium oxide and aluminum oxide. Preferably, the mixture or the mixed oxide of cerium oxide and aluminum oxide has a weight ratio of ceria to alumina from 10:90 to 90:10, 30:70 to 70:30, more preferably from 40: 60 to 60:40, and even more preferably from 45:55 to 55:45.

Another preferred refractory metal support material of the top washcoat comprises aluminum oxide that is doped with lanthanum, like lanthana (like La₂O₃). Alumina doped with lanthana refers to alumina containing a rather small amount of lanthana, preferably up to 10 wt%, more preferably up to 7 wt%, even more preferably up to 5 wt%, and most preferably up to 4 wt% lanthana, based on the weight of the lanthana-doped alumina. The La-doped alumina contains at least 0.5 wt%, more preferably at least 1 wt%, and most preferably at least 2 wt% lanthana, based on the weight of the lanthana-doped alumina.

The aluminum oxide as used in the refractory metal oxide support material can preferably be stabilized aluminum oxide. The aluminum oxide of the refractory metal oxide support can also preferably be gamma aluminum oxide. The refractory metal oxide support of the three-way conversion catalyst of the present invention can optionally comprise additional metal oxides, like zirconia, ceria, baria and/or neodymia.

In view of the stringent emission particle number emission regulations like Euro6c, removal of particulate matter from combustion engines has become a critical requirement in the treatment of exhaust gas streams. Therefore, the three-way conversion catalysts (TWC) of the present invention can be combined with particulate filters, like for instance gasoline particulate filter (GPF), which are used for the purification of the exhaust stream of gasoline engines. When a three-way conversion catalyst (TWC) is combined with an additional particulate filter function, the resulting catalyst is typically termed a so-called "four-way conversion catalyst" (FWC).

The term "particulate filter" has herein used, refers to a substrate sized and configured to trap particulates generated in the exhaust gas stream, preferably from a gasoline engine. The trapping of the particulate matter can occur, for example, by use of a particulate (or soot) filter, by use of a flow-through substrate having an internal tortuous path such that a change in direction of flow of the particulates causes them to drop out of the exhaust stream, by use of a metallic substrate, such as a corrugated metal carrier, or by other methods known to those skilled in the art. Suitable substrates are described in more detail below but other filtration devices may also be suitable, such as a pipe with a roughened surface that can knock particles out of the exhaust stream. A pipe with a bend may also be suitable. When the three-way conversion catalyst (TWC) of the present invention is combined with a particulate filter component, there are several options for additionally removing the particulate matter from the exhaust gas stream. One preferred option for including the particulate removal function into the three-way conversion catalyst (TWC) is to add a separate particulate filter, which is uncoated by an additional catalytic function. For instance, such a bare particulate filter is not coated with a three-way conversion catalyst (TWC), or any other catalytic function except for the filter function that is capable of purging the particulate matter from the exhaust gas stream. Initial particulate removal functions included uncoated gasoline particulate filters (GPF) positioned downstream of the three-way conversion catalyst (TWC). Another preferred option for a particulate filter function is a particulate filter, which is coated with the three-way conversion catalyst (TWC) of the present invention. In other words, the particulate filter is a coated particulate filter. In this embodiment, the particulate filter is used as substrate on which the three-way conversion catalyst (TWC) of the present invention is coated on the surface or the pores of the particulate filter. As described in more detail above, the three-way conversion catalyst (TWC) when present on the particulate filter can be present in the form of one single washcoat, or several washcoats, like for instance two different washcoats or coatings, i.e. by comprising a top washcoat and a bottom washcoat. The coating of the particulate filter can be present in different modes. One option is to present the three-way conversion catalyst (TWC) to the filter substrate by a so-called "in-wall coating". Another option is to combine such in-wall coating with an additional "on-wall coating" on a wall-flow filter substrate.

The three-way conversion catalyst (TWC) of the present invention is positioned on an appropriate substrate (or carrier). Suitable substrates are 3-dimensional, having a length, a diameter and a volume, like a cylinder. The shape does not necessarily have to conform to a cylinder. The length is an axial length defined by an inlet end and an outlet end. The substrate of the present invention may be constructed of any material typically used for preparing automotive catalysts and will typically comprise a metal or ceramic honeycomb structure. Preferably, the substrate provides a plurality of wall surfaces upon which the washcoat composition(s) is/are applied and adhered, thereby acting as a substrate for the catalyst composition.

The substrate can be constructed of any material typically used for preparing automotive catalysts and will typically comprise a metal or ceramic honeycomb structure. The substrate typically provides a plurality of wall surfaces upon which the washcoat composition is applied and adhered, thereby acting as substrate for the catalyst composition.

The substrate of the three-way conversion catalyst of the present invention can be a typical monolithic substrate of the type having fine, parallel gas flow passages extending there through from an inlet or an outlet face of the substrate such that passages are open to fluid flow there through ("flow-through substrate").

The flow-through substrate can be a monolithic substrate including a flow-through honeycomb monolithic substrate. The skilled person is familiar with flow-through substrates, which generally have fine, parallel gas flow passages extending from an inlet end to an outlet end of the substrate such that passages are open to fluid flow. The passages, which are essentially straight paths from their fluid inlet to their fluid outlet, are defined by walls on which a catalytic coating can be disposed so that gases flowing through the passages contact the catalytic material. The flow passages of the flow-through substrate are thin-walled channels, which can be of any suitable cross-sectional shape and size, such as trapezoidal, rectangular, square, sinusoidal, hexagonal, oval, circular or the like. The flow-through substrate can be ceramic or metallic as further described below. Flow-through substrates can, for example, have a volume of from about 50 in³ to about 1200 in³, a cell density (inlet openings) of from about 60 cells per square inch (cpsi) to about 1200 cpsi or about 200 to about 900 cpsi, or for example from about 300 to about 600 cpsi and a wall thickness of from about 50 to about 400 microns or about 100 to about 200 microns.

Suitable substrates can be ceramic substrates, which are made of any suitable refractory material, e.g. cordierite, cordierite-α-alumina, aluminum titanate, silicon titanate, silicon carbide, silicon nitride, zircon mullite, spodumene, alumina-silica-magnesia, zircon silicate, sillimanite, a magnesium silicate, zircon, petalite, α-alumina, an aluminosilicate and the like.

Substrates suitable in the present invention can also be metallic, comprising one or more metals or metal alloys. A metallic substrate may include any metallic substrate, such as those with openings or "punch-outs" in the channel walls. The metallic substrates may be employed in various shapes such as pellets, corrugated sheet or monolithic foam. Specific examples of metallic substrates include heat-resistant, base-metal alloys, especially those in which iron is a substantial or major component. Such alloys may contain one or more of nickel, chromium, and aluminum, and the total of these metals may advantageously comprise at least about 15 wt.% of the alloy, for instance, about 10 to about 25 wt.% chromium, about 1 to about 8 wt.% of aluminum, and from 0 to about 20 wt.% of nickel, in each case based on the weight of the substrate. Examples of metallic substrates include those having straight channels, those having protruding blades along the axial channels to disrupt gas flow and to open communication of gas flow between channels.

The most preferred substrates in the present invention are wall flow filter substrates. Wall flow filter substrates as understood by the skilled person have a plurality of fine, substantially parallel gas flow passages extending along the longitudinal axis of the substrate where, typically, each passage is blocked at one end of the substrate body, with alternate passages blocked at opposite end faces ("wall flow filter"). Suitable flow-through and wall-flow substrates are also taught, for example, in International Application Publication No. WO 2016/070090, which is incorporated herein by reference in its entirety. The three-way conversion catalyst of the present invention is preferably prepared by applying the various catalytic functions or catalytic components to the substrate in the form of coating or several coatings to form layered catalysts (commonly referred to as washcoat or washcoats).

For example, a washcoat layer of a composition containing the catalytic components of the three-way conversion catalyst (TWC) can be formed by preparing a mixture or a solution of a platinum group metal (PGM) precursor selected from platinum, palladium and/or rhodium, optionally some additional precious metal group element, in a suitable solvent, e.g. water. Generally, from the point of view of economics and environmental aspects, aqueous solutions of soluble compounds or complexes of the platinum group metal, including platinum, palladium and/or rhodium, are preferred. Typically, the platinum group metal precursor is utilized in the form of a compound or complex to achieve dispersion of the precursor on the support. For purposes of the present invention, the term "platinum group metal precursor" means any compound, complex, or the like which, upon calcination or initial phase of use thereof, decomposes or otherwise converts to a catalytically active form. Suitable complexes or compounds preferably include, but are not limited to compounds like platinum chlorides (e.g. salts of [PtCl4]², [PtCl₆]²⁻), platinum hydroxides (e.g. salts of [Pt(OH)₆]²⁻), platinum amines (e.g. salts of [Pt(NH₃)₄]²⁺, ]Pt(NH₃)₄]⁴⁺), platinum hydrates (e.g. salts of [Pt(OH₂)₄]₂⁺), platinum bis(acetylacetonates), and mixed compounds or complexes (e.g. [Pt(NH₃)₂(Cl)₂]), in case of platinum. A representative commercially available platinum source is 99% ammonium hexachloroplatinate from Strem Chemicals, Inc., which may contain traces of other platinum group metals (PGM).

However, it will be understood that the present invention is not restricted to platinum precursors of a particular type, composition, or purity. Similar platinum precursors can be applied. Further, as far as palladium and rhodium is concerned, the skilled person will be familiar with similar palladium and rhodium group metal (PGM) precursors, which can be applied like the platinum precursor as mentioned above.

A mixture or solution of the platinum group metal (PGM) precursor is added to the support by one of several chemical means. These include impregnation of a solution of the precursor onto the support, which may be followed by a fixation step incorporating acidic component (e.g. acetic acid) or a basic component (e.g. ammonium hydroxide). This wet solid can be chemically reduced or calcined or be used as is. Alternatively, the support may be suspended in a suitable vehicle (e.g. water) and reacted with the precursor in solution. Additional processing steps may include fixation by an acidic component (e.g. acetic acid) or a basic component (e.g. ammonium hydroxide), chemical reduction, or calcination. In the impregnation process, appropriate amounts of the optional oxygen storage component (OSC) and/or promoter, as well as other additives, can be added to the slurry for impregnation of the substrate, if desired.

As already indicated above, the platinum component can be pre-treated when forming the corresponding washcoat layer.

To apply the three-way conversion catalyst (TWC), like a washcoat layer therefrom, finely divided particles of the three-way conversion catalyst (TWC) are suspended in an appropriate vehicle, e.g., water, to form a slurry. Other promoters and/or stabilizers and/or surfactants may be added to the slurry as mixtures or solutions in water or a water-miscible vehicle. In one or more embodiments, the slurry is comminuted to result in substantially all of the solids having particle sizes of less than about 10 microns, i.e., in the range of about 0.1-8 microns, in an average diameter. The comminution may be accomplished in a ball mill, continuous Eiger mill, or other similar equipment. In one or more embodiments, the suspension or slurry has a pH of about 2 to less than about 7. The pH of the slurry may be adjusted if necessary, by the addition of an adequate amount of an inorganic or an organic acid to the slurry. The solids content of the slurry may be, e.g., about 20-60 wt. %, and more particularly about 35-45 wt. %. The substrate may then be dipped into the slurry, or the slurry otherwise may be coated on the substrate, such that there will be deposited on the substrate a desired loading of the three-way conversion catalyst (TWC) layer. Thereafter, the coated substrate is dried at about 100°C and calcined by heating, e.g., at 300-650°C for about 1 to about 3 hours. Drying and calcination are typically done in air. The coating, drying, and calcination processes may be repeated if necessary, to achieve the final desired gravimetric amount of the three-way conversion catalyst (TWC), like the washcoat layer therefrom, on the support. In some cases, the complete removal of the liquid and other volatile components may not occur until the three-way catalyst (TWC) is placed into use and subjected to the high temperatures encountered during operation.

After calcining, the three-way conversion catalyst (washcoat) loading can determined through calculation of the difference in coated and uncoated weights of the substrate. As will be apparent to those of skill in the art, the three-way conversion catalyst (TWC) loading can be modified by altering the solids content of the coating slurry and slurry viscosity. Alternatively, repeated immersions of the substrate in the coating slurry can be conducted, followed by removal of the excess slurry as described above.

The present invention is also directed to a method of treating an exhaust gas stream, preferably from a gasoline engine, comprising the steps of providing an exhaust gas stream, preferably from a gasoline engine, comprising nitrogen oxides (NOx), carbon monoxide (CO) and hydrocarbons (HC), and contacting the exhaust gas stream with the three-way conversion catalyst (TWC) of the present invention. The present invention is also directed to the use of the three-way conversion catalyst (TWC) of the present invention for purifying nitrogen oxides (NOx), carbon monoxide (CO) and hydrocarboms (HC) from the exhaust gas stream, which is preferably generated from a gasoline engine.

In a preferred embodiment, the use of the three-way conversion catalyst (TWC) for purifying the exhaust gas stream of the gasoline engine includes an engine bed temperature of more than 1000°C, more preferably of more than 1020°C.

It has been shown in the present invention that under typical aging conditions derived from subjecting the three-way conversion catalyst (TWC) to typical engine bed temperatures of around 1000°C, the three-way conversion catalyst (TWC) of the present invention is able to provide excellent stability and purification performance.

This result has been achieved by the three-way conversion catalyst (TWC) of the present invention, which includes a combination of the three platinum group metals (PGM) platinum, palladium and rhodium. In view of three-way conversion catalysts (TWC) known from the prior art, palladium has been successfully replaced with platinum to a significant extent. In fact, substantial amounts of platinum can be used in the preferred layered three-way conversion catalysts (TWC) of the present invention as additional platinum group metal (PGM) component, helping to reduce the amount of other platinum group metals (PGM) that may have higher cost than platinum. In one preferred embodiment, the platinum can be used to replace substantial amounts of palladium in the bottom washcoat to form a bottom washcoat comprising mixtures of palladium and platinum as the platinum metal group (PGM) component. Alternatively, or additionally, the top washcoat of the three-way conversion catalyst (TWC) of the present invention can comprise a combination of palladium and rhodium, or even a ternary combination of platinum, palladium and rhodium.

In the present invention, it has been found that the stability of the inventive platinum-containing three-way conversion catalysts (TWC) against aging at high temperatures has been unexpectedly improved by the platinum group metal (PGM) component comprising platinum. Further, when selected refractory metal oxide supports, most preferably mixtures or mixed oxides of ceria alumina or lanthanum-doped alumina are additionally used, the stability of the three-way conversion catalyst (TWC) against aging is improved. By this approach, reduction of emissions with respect to nitrogen oxides (NOx), carbon monoxide (CO) and hydrocarbons (HC) can be at least maintained or even further reduced relative to the three-way conversion catalysts (TWC) in which platinum has been basically avoided or at least reduced for preservation of catalyst performance under aging. It is especially remarkable that the performance of the inventive three-way conversion catalysts could be even maintained at extremely hot engine aging temperatures of more than 1000°C, like for instance at bed temperatures higher than 1020°C.

### Examples

### Catalyst Preparation Description

### Example 1: 112 g/ft³ Pd or Pt on alumina or support A (Model catalyst)

Technology contains either Pd or Pt impregnated on high porosity alumina in a single slurry single layer design with a total wash coat load of 1.53 g/in3. The main component of the slurry is high porosity alumina unto which Pd was impregnated with an aqueous solution of Palladium nitrate yielding a final dry Pd content of 112 g/ft³. The process entails Pd-impregnation on alumina, followed by thermal fixation of alumina-PGM frit (60-75% solids) at 400-600 °C for 2-4 hrs.

The calcined PGM-containing frit was made into slurry under constant stirring using distilled water and a surfactant such as n-octanol. Slurry solid content was adjusted (35-40%) to enhance pH and viscosity measurements and wet milling. After milling, the pH was adjusted by nitric acid (3.2-4.5). Slurry particle size distribution (D90) was also measured before and after milling (12-17 µm).

Ceramic honeycomb flowthrough substrate cores (1x4", 600/4) were coated, dried (120-180 °C) and calcined (400-600 °C) in air, respectively. Pd and Pt on support A were both prepared analogous to the process steps described above.

### Example 2: 120 g/ft³ 0/112/8 or 56/56/8 Pt/Pd/Rh full-size catalysts

Technology contains a double-layered design with Pd and Rh in the bottom layer prepared by impregnating Pd and/or Rh on specific supports, which can be either ceria-zirconia, alumina, or both, followed by thermal fixation of the PGM-containing frits at high solid contents (60-75%) at 400-600 °C in a calciner for 2-4 hrs.

Slurry was prepared by stirring the calcined frits in a container pre-filled with distilled water and n-octanol. Promoters such as barium and lanthanum (acetates or nitrate precursors) were added with thorough mixing. The slurry solid content was set to 35-40% to allow for pH, viscosity measurements and wet milling. After initial pH adjustment with nitric acid (3.2-4.5), the slurry was milled to the desired particle size (D90 12-17 µm) followed by a final pH adjustment.

Slurry coating on a ceramic substrate (4.66x4" 600/4) was carried out with drying (120-180 °C) and calcination (400-600 °C) in air, respectively. The top layer containing either Pd or Pt on high porosity alumina was prepared in similar impregnation, thermal fixation, and slurry steps. The latter was coated on the dry/calcined bottom layer to the desired wash coat loading followed by drying and final calcination. Total WC is 2.8-4.5 g/in3 (BC and TC).

### Example 3: 55 g/ft³ 0/45/10 or 22.5/22.5/10 Pt/Pd/Rh full-size

Technology also contains a double-layered design but with PtPd bottom layer prepared by wet impregnation of Pd and/or Pt on specific supports, which can either be ceria-zirconia, doped-alumina, or both. Thermal fixation of the PGM-containing frits at high solid contents (60-75%) at 400-600 °C in a calciner for 2-4 hours followed the impregnation step.

Slurry was prepared by stirring the calcined frits in a container pre-filled with distilled water and n-octanol. Other catalysts ingredients such as barium and lanthanum and zirconium (acetates or nitrate or sulfate precursors) were added with thorough mixing. The slurry solid content was set to 35-40% to allow for pH, viscosity measurements and wet milling. After initial pH adjustment with nitric acid (3.2-4.5), the slurry was milled to the desired particle size (D90 12-17 µm) followed by a final pH adjustment. Slurry coating onto ceramic honeycomb substrates (4.0x5.36", 900/2.5) was carried out with coating, drying (120-180 °C) and calcination (400-600 °C) in air, respectively. The top layer containing Pd and Rh using the appropriate supports (Ceria-zirconia and/or doped-alumina) was prepared in similar impregnation, thermal fixation, and slurry steps. The latter was coated on the dry/calcined bottom layer to the desired wash coat loading followed by drying and calcination. Total WC is 2.8-4.5 g/in3 (BC and TC)

Comparative example A uses Pt on support A, comparative example B uses Pt on support B.

### Example 4: 80 g/ft³ 0/70/10 or X/70-X/10 (X=Pt) Pt/Pd/Rh full size

Slurry process and PGM distribution in the respective layers for example 4 is identical to that for example 3. However, differences emanate from the wash coat thicknesses and total PGM loadings as well as type and amount of ceria-zirconia (composition), doped-alumina and other ingredients in the respective layers. Furthermore, only one Pt-support material (support A) was used in this technology.

### Catalyst Performance Evaluation

Catalysts described under example 1 were wash-coated on 1x4" flow-through ceramic substrate cores (400/4; CPSI/wt).

Oven aging was done in an in-house oven equipped with several gas lines for simultaneous dosage of several gases under controlled flow conditions. All catalysts were aged together in the oven at 900°C hydrothermally (10% O2 and 10% steam) for 4 hours.

Fuel-cut aging was done using canned monoliths arranged in a 5-leg spider configuration and mounted as closely as possible in a CC1 position on a gasoline engine bench. A thermocouple is placed in the engine out position and every can is also fitted with a bed TC as well as the tailpipe position. Lambda sensors upstream (Engine out) and downstream (tailpipe) ensure the strict implementation of the lean/richness of the aging cycle.

All aged cores were evaluated individually, using a Gasoline System Simulator (GSS) reactor operated using the NEDC test cycle implemented from a real vehicle in the CNG mode. To evaluate the impact of hydrothermal aging on the various technologies, the same cores were evaluated in the fresh state on same reactor prior to oven-aging.

Fuel-cut aging was done using canned monoliths arranged in a 5-leg spider configuration and mounted as closely as possible to a CC1 position on a gasoline engine bench. A thermocouple is placed in the engine out position and every can is also fitted with a TC in the bed as well as the tailpipe positions. Lambda sensors upstream (Engine out) and downstream (tailpipe) ensure the strict implementation of the lean/richness of the aging cycle.

Dynamic testing (WLTC) was carried out on gasoline engines calibrated for the Euro 6 applications. Aged and canned monoliths were evaluated in the CC1 position in accordance with lambda1 application standards wherein lean/richness and temperatures were monitored in the pre (inlet) and post (outlet) positions on the exhaust line.

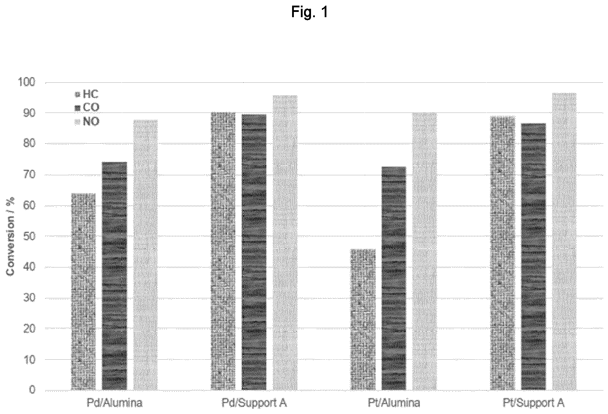

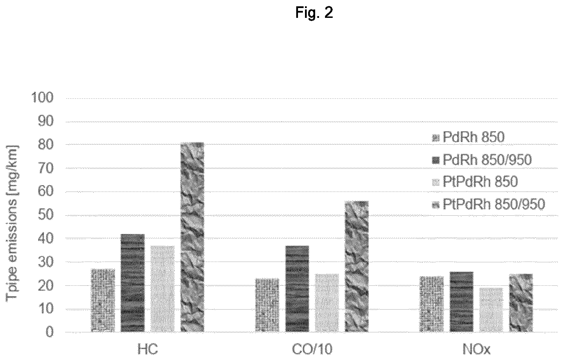

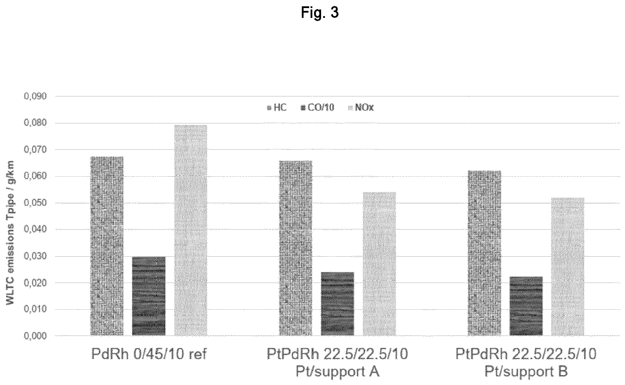

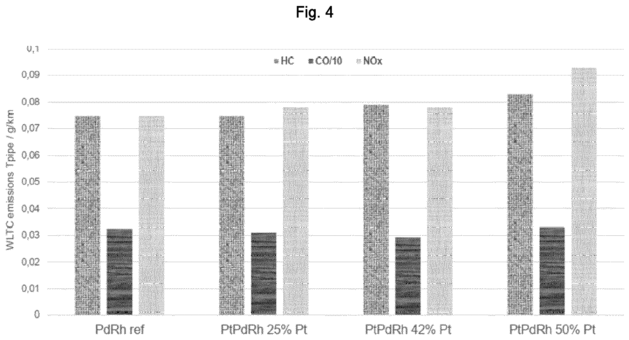

## Claims

1. Three-way conversion catalyst (TWC) for the treatment of an exhaust gas stream comprising nitrogen oxides (NOx), carbon monoxide (CO) and hydrocarbons (HC), comprising platinum group metal (PGM), a refractory metal oxide support, and a carrier **characterized in that** the platinum group metal (PGM) comprises platinum, palladium and rhodium.

2. Three-way conversion catalyst (TWC) according to claim 1, wherein the three-way conversion catalyst (TWC) is in closed-coupled position.

3. Three-way conversion catalyst (TWC) according to claims 1 or 2, wherein the three-way conversion catalyst (TWC) comprises multiple washcoat layers including a bottom washcoat layer and a top washcoat layer.

4. Three-way conversion catalyst (TWC) according to claim 3, wherein the multiple washcoat layers consist of two washcoat layers, one bottom washcoat layer and one top washcoat layer.

5. Three-way conversion catalyst (TWC) according to claim 3 or 4, wherein the bottom washcoat layer comprises the combination of platinum and palladium as platinum group metal (PGM).

6. Three-way conversion catalyst (TWC) according to one of claims 3 to 5, wherein the top washcoat layer comprises the combination of palladium and rhodium as platinum group metal (PGM).

7. Three-way conversion catalyst (TWC) according to one of claims 3 to 6, wherein the bottom washcoat comprises platinum and palladium as the only platinum group metal (PGM) and/or the top washcoat comprises rhodium, preferably palladium and rhodium, and more preferably platinum, palladium and rhodium, as the only platinum group metal (PGM).

8. Three-way conversion catalyst (TWC) according to one of the preceding claims 1 to 7, wherein the refractory metal oxide support is selected from a mixture or mixed oxide of ceria and alumina or lanthana-doped alumina comprising lanthana in an amount of up to 10 wt% based on the weight of the lanthana-doped alumina.

9. Three-way conversion catalyst (TWC) according to claim 8, wherein the refractory metal oxide support is selected from a mixture or mixed oxide of ceria and alumina having a weight ratio of 10:90 to 90:10.

10. Three-way conversion catalyst (TWC) according to one of the preceding claims 1 to 9, wherein the platinum is pre-treated.

11. Three-way conversion catalyst (TWC) according to one of the preceding claims 1 to 10, wherein the three-way conversion catalyst (TWC) further comprises an oxygen storage component (OSC) and/or a promoter.

12. Three-way conversion catalyst (TWC) according one of the preceding claims 1 to 11, wherein the weight ratio of platinum to palladium is below 1:1.

13. Method of treating an exhaust gas stream from a gasoline engine comprising the steps of providing an exhaust gas stream from a gasoline engine comprising nitrogen oxides (NOx), carbon monoxide (CO) and hydrocarbons (HC), and contacting the exhaust gas stream with the three-way conversion catalyst (TWC) according to one of the preceding claims 1 to 12.

14. Use of the three-way conversion catalyst (TWC) according to one of the preceding claims 1 to 13 for purifying nitrogen oxides (NOx), carbon monoxide (CO) and hydrocarbons (HC) from the exhaust gas stream of a gasoline engine.

15. Use of the three-way conversion catalyst (TWC) according to claim 14, wherein purifying the exhaust gas stream of the gasoline engine includes an engine bed temperature of more than 1000°C, preferably more than 1020°C.
